# EUROPEAN PATENT SPECIFICATION

(11) **EP 3 623 623 B1**
(45) Date of publication and mention of the grant of the patent: **06.01.2021**
(21) Application number: 19196861.9
(22) Date of filing: 12.09.2019
(51) Int. Cl.: F04B 35/04, F04B 39/02, F04B 49/06, F25B 49/02

(54) **METHOD FOR CONTROLLING LINEAR COMPRESSOR AND REFRIGERATOR**
VERFAHREN ZUR STEUERUNG EINES LINEAREN VERDICHTERS UND EINES KÜHLSCHRANKS
PROCÉDÉ DE COMMANDE D'UN COMPRESSEUR LINÉAIRE ET D'UN RÉFRIGÉRATEUR

(30) Priority: 13.09.2018 KR 20180109707
(43) Date of publication of application: 18.03.2020
(73) Proprietor: LG ELECTRONICS INC., Yeongdeungpo-Gu Seoul 07336 (KR)
(72) Inventor: Kim, Hyun, 08592 Seoul (KR); Lee, Sungwoo, 08592 Seoul (KR)
(74) Representative: Ter Meer Steinmeister & Partner

(56) References cited:
- KR-A- 20180 093 526
- US-A1- 2006 115 366
- US-A1- 2013 195 613
- US-A1- 2018 010 847

## Description

### BACKGROUND

The present invention relates to a method for controlling a linear compressor and a method for controlling a refrigerator.

In general, a refrigerator is a home appliance which is capable of storing food at a low temperature in a storage chamber inside the refrigerator, which is shielded by a door. The refrigerator is provided with a cooling system, and an inside of the storage chamber is maintained to be at a temperature lower than an external temperature.

The cooling system is a system that generates cold air by circulating a refrigerant, and repeatedly performs compression, condensation, expansion, and evaporation processes of the refrigerant. To this end, the cooling system includes a compressor, a condenser, an expansion device, and an evaporator.

In general, a compressor is a mechanical device that increases the pressure by receiving power from a power generating device such as an electric motor and a turbine to compress air, refrigerant, or other various working fluids, and is widely used throughout the industry in addition to home appliances such as the refrigerator.

The compressor is divided into a reciprocating compressor, a rotary compressor, and a scroll compressor according to the compression method of the working fluid.

In detail, the reciprocating compressor includes a cylinder and a piston provided in the cylinder to linearly reciprocate. A compression space is formed between the piston head and the cylinder, and the working fluid in the compression space is compressed to high temperature and high pressure while the compression space is increased and decreased by the linear reciprocating motion of the piston.

Recently, among the reciprocating compressors, the development of a linear compressor to directly connect the piston to the linear reciprocating linear motor has been actively made.

In detail, the linear compressor is configured to suction the refrigerant into the compression space, compress, and then discharge the refrigerant while the piston is linearly reciprocated in the cylinder by the linear motor inside the sealed shell. In addition, the linear compressor may be provided as an oilless compressor using a refrigerant as a bearing without working oil such as oil.

In relation to the linear compressor provided in the oilless as described above, the applicant has filed a prior document.

Publication Number: No. 10-2018-0093526 (Publication date: August 22, 2018)

The prior document discloses a structure in which at least some of the refrigerant compressed by the piston (hereinafter, the bearing refrigerant) is provided to the piston through the frame and the cylinder.

At this time, in a case where the bearing refrigerant is not sufficiently supplied, there is a problem that does not function as a bearing. Accordingly, various problems may occur such that the piston does not operate normally and is damaged by friction.

In particular, when an ambient temperature of the linear compressor is very low, the bearing refrigerant does not function as a bearing. Specifically, as the ambient temperature is lowered, the amount of refrigerant flowing through the linear compressor is reduced, thereby reducing the amount of the bearing refrigerant. Therefore, there is a problem that the bearing refrigerant does not provide the floating force to the piston.

In addition, as the ambient temperature is lowered, the temperature of the bearing refrigerant may be lowered and condensed. As the bearing refrigerant is condensed, the bearing flow path formed in the frame or the cylinder may be closed. Therefore, there is a problem that the bearing refrigerant is not supplied to the piston.
US 2018/0010847 A1 discloses a refrigerator controlling method and system with a linear compressor. The method comprises monitoring an environment temperature T of the refrigerator and comparing the environment temperature T with a preset environment temperature threshold T0. If T is larger than T0, the refrigerator runs under first operation condition, and if T is smaller or equal to T0 the refrigerator runs under a second operation condition. The refrigeration amount of the linear compressor by the second operation condition is larger than by the first operation condition, wherein a compartment of the refrigerator reaches a target temperature.
KR 2018 0093526 A shows a linear compressor comprising a cylinder, a piston provided in the cylinder and a motor assembly for driving the piston in the axial direction of the cylinder. The motor assembly is provided on the outer circumferential side of the cylinder and includes an outer stator, an inner stator and a permanent magnet provided between the stators. The compressor further includes a flow path for providing a portion of a discharged refrigerant to a space between the outer circumferential surface of the piston and the inner circumferential surface of the cylinder, wherein the portion of the refrigerant works as a gas bearing between the piston and the cylinder.

### SUMMARY

According to one aspect, a method is provided for controlling a linear compressor and a refrigerator for ensuring a smooth bearing function of the bearing refrigerant when the ambient temperature is lowered to a predetermined safety temperature or less.

In addition, a method is provided for controlling a linear compressor and a refrigerator to heat the coil and transfer heat to the bearing refrigerant, as a safety current higher than the maximum applied current is applied to the motor assembly.

A method for controlling a linear compressor having a piston according to an aspect of the present invention includes measuring an ambient temperature, and when the measured ambient temperature is equal to or lower than the preset safety temperature A, applying a safety current S to a motor assembly for driving the piston. The linear compressor may further comprise a bearing flow path configured to supply bearing refrigerant to the piston and/or a motor assembly for driving the piston. The method may further comprise one or more of the below preferred features.

When the measured ambient temperature is higher than the safety temperature A, a current lower than the safety current S may be applied to the motor assembly.

The method may further comprise that the linear compressor is turned on, and when the measured ambient temperature is higher than the safety temperature A, the drive current D (m<D<M) greater than the minimum applied current m and smaller than the maximum applied current M (m<M) is applied to the motor assembly.

The maximum applied current M may correspond to a current value smaller than the safety current S. The minimum applied current may correspond to a value for the drive current at which the compressor is operated at the minimum output. Likewise, the maximum applied current may correspond to a value for the drive current at which the compressor is operated at the maximum output.

The method may further comprise: after applying the safety current to the motor assembly, measuring the ambient temperature. When the measured ambient temperature is equal to or lower than the safety temperature, the safety current may be continuously applied to the motor assembly. When the measured ambient temperature is higher than the safety temperature, the drive current may be applied to the motor assembly.

When the maximum applied current is applied to the motor assembly, the piston may be reciprocated between a maximum top dead center and a maximum bottom dead center. In other words, the maximum applied current may correspond to a current for reciprocating the piston between a maximum top dead center and a maximum bottom dead center. The maximum top dead center and the maximum bottom dead center may define a maximum stroke distance or maximum stroke amplitude.

When the safety current is applied to the motor assembly, the piston may be reciprocated between a safety top dead center and a safety bottom dead center. The maximum top dead center may be between the safety top dead center and the safety bottom dead center and spaced apart from the safety top dead center. Likewise, the maximum bottom dead center may be between the safety top dead center and the safety bottom dead center and spaced apart from the safety bottom dead center.

A safety stroke distance which is the distance between the safety top dead center and the safety bottom dead center may be longer than a maximum stroke distance which is a distance between the maximum top dead center and the maximum bottom dead center. That is, the maximum stroke distance may be within the safety stroke distance.

The piston may be reciprocated in an axial direction.

The safety top dead center may be located in front of the maximum top dead center in the axial direction.

The safety bottom dead center may be located in rear of the maximum bottom dead center in the axial direction.

The method may further comprise: turning off the linear compressor, and when the measured ambient temperature is equal to or lower than the safety temperature, applying a safety current to the motor assembly. After applying the safety current, the ambient temperature may be measured, and when the measured ambient temperature is equal to or lower than the safety temperature, the safety current may be continuously applied to the motor assembly. When the measured ambient temperature is higher than the safety temperature, applying the safety current to the motor assembly may be stopped.

The bearing flow path may include a cylinder bearing flow path formed in a cylinder in which the piston is received, and a frame bearing flow path formed in a frame in which the cylinder is received. The piston may be reciprocated by the motor assembly to compress refrigerant. At least some of the compressed refrigerant may flow into the cylinder bearing flow path and the frame bearing flow path and may be supplied to the piston.

The cylinder bearing flow path may include a gas inlet formed by being recessed inward from an outer circumferential surface of the cylinder in a radial direction. The cylinder bearing flow path may include a cylinder nozzle formed by extending from the gas inlet to an inner circumferential surface of the cylinder.

The motor assembly may include an outer stator having a coil to which current is applied; an inner stator disposed inside the outer stator; and a permanent magnet disposed movably inside the outer stator and the inner stator, the permanent magnet being connected to the piston.

When the safety current is applied to the coil, the bearing refrigerant may be expanded by the heat generated in the coil.

The ambient temperature may correspond to an outer temperature of a shell in which the piston is received and to which a suction pipe and a discharge pipe are coupled to each other in which the refrigerant flows therein and discharged therefrom, respectively. The ambient temperature may correspond to a temperature of a machine room of a refrigerator in which the linear compressor is installed.

The safety temperature may be 10 degrees.

A method for controlling a refrigerator according to another aspect of the present invention includes measuring an internal temperature and an external temperature of a storage chamber, and when the measured external temperature is equal to or lower than the preset safety temperature, applying a safety current (S) to the linear compressor. The refrigerator may include a linear compressor as described above. Also the method for controlling the refrigerator may include the method for controlling the linear compressor according to any one of the above described embodiments.

The method for controlling a refrigerator may include, when the measured internal temperature is equal to or higher than the preset temperature in the refrigerator, applying a driving current D (m <D <M) which is higher than the minimum applied current m and lower than the maximum applied current M (m<M) to the linear compressor.

The maximum applied current M may correspond to a current value smaller than the safety current S.
When the measured external temperature is equal to or lower than the safety temperature and the measured internal temperature is equal to or higher than the temperature in the refrigerator, the safety current may be applied to the linear compressor. For instance, only when the measured external temperature is equal to or lower than the safety temperature and the measured internal temperature is equal to or higher than the temperature in the refrigerator, the safety current may be applied to the linear compressor. The external temperature may correspond to the ambient temperature. For instance, the external temperature may correspond to a temperature of a machine room of a refrigerator in which the linear compressor is installed.

When the measured external temperature is higher than the safety temperature and the measured internal temperature is equal to or higher than the temperature in the refrigerator, the driving current may be applied to the linear compressor. For instance, only when the measured external temperature is higher than the safety temperature and the measured internal temperature is equal to or higher than the temperature in the refrigerator, the driving current may be applied to the linear compressor.

The higher the external temperature, the greater the current value of the driving current may be set.

### BRIEF DESCRIPTION OF THE DRAWINGS

Fig. 1 is a view illustrating a refrigerator according to an embodiment of the present invention.
Fig. 2 is a view illustrating an outer appearance of the linear compressor according to an embodiment of the present invention.
Fig. 3 is an exploded view illustrating a shell and a shell cover of the linear compressor according to an embodiment of the present invention.
Fig. 4 is an exploded view illustrating a configuration of the linear compressor according to an embodiment of the present invention.
Fig. 5 is a view illustrating a section taken along the line V-V' of Fig. 2.
Fig. 6 is a view illustrating a control configuration of the linear compressor according to an embodiment of the present invention.
Figs. 7 and 8 are views illustrating the control flow of the linear compressor according to an embodiment of the present invention.
Fig. 9 is a view illustrating a control flow of a refrigerator having a linear compressor according to an embodiment of the present invention.

### DETAILED DESCRIPTION OF THE EMBODIMENTS

Hereinafter, some embodiments of the present invention will be described in detail with reference to the accompanying drawings. In adding reference numerals to the components of each drawing, it should be noted that the same reference numerals are assigned to the same components as much as possible even though they are illustrated in different drawings. In addition, in describing the embodiments of the present invention, when it is determined that a detailed description of a related well-known configuration or function interferes with the understanding of the embodiments of the present invention, the detailed description thereof will be omitted.

In addition, in describing the components of the embodiments of the present invention, terms such as first, second, A, B, (a), and (b) may be used. These terms are only for distinguishing the components from other components, and the nature, sequence, or order of the components are not limited by the terms. If a component is described as being "connected", "coupled" or "accessed" to another component, that component may be directly connected or accessed to that other component, but It is to be understood that another component may be "connected", "coupled" or "accessed" between each component.

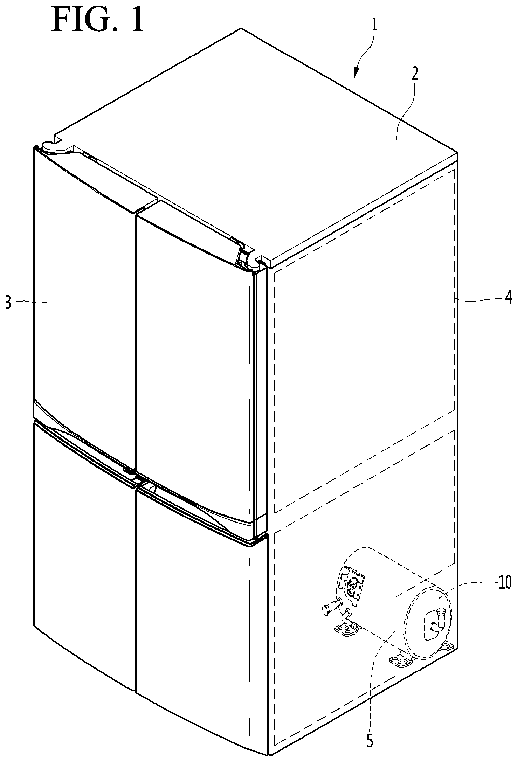

Fig. 1 is a view illustrating a refrigerator according to an embodiment of the present invention.

As illustrated in Fig. 1, the refrigerator 1 according to the spirit of the present invention includes a cabinet 2 forming an outer appearance and at least one refrigerator door 3 coupled to the cabinet 2.

At least one storage chamber 4 is provided inside the cabinet 2. At this time, the refrigerator door 3 may be rotatably or slidably connected to the front surface of the cabinet 2 to open and close the storage chamber 4. At this time, the storage chamber 4 may include at least one of a refrigerating chamber and a freezing chamber, and each chamber may be partitioned by a partition wall.

In addition, the inside of the cabinet 2 is provided with a machine room 5 in which the compressor 10 is disposed. As illustrated in Fig. 1, in general, the machine room 5 may be disposed at the lower rear side of the cabinet 2. In Fig. 1, the arrangement of the compressor 10 is merely exemplary, and the compressor 10 may be disposed at various places.

In addition, the compressor 10 may be provided as a linear compressor which is a kind of reciprocating compressor. The linear compressor may be installed in various devices such as an air conditioner as well as the refrigerator 1 to form a refrigeration cycle.

Hereinafter, a linear compressor according to the spirit of the present invention will be described in detail.

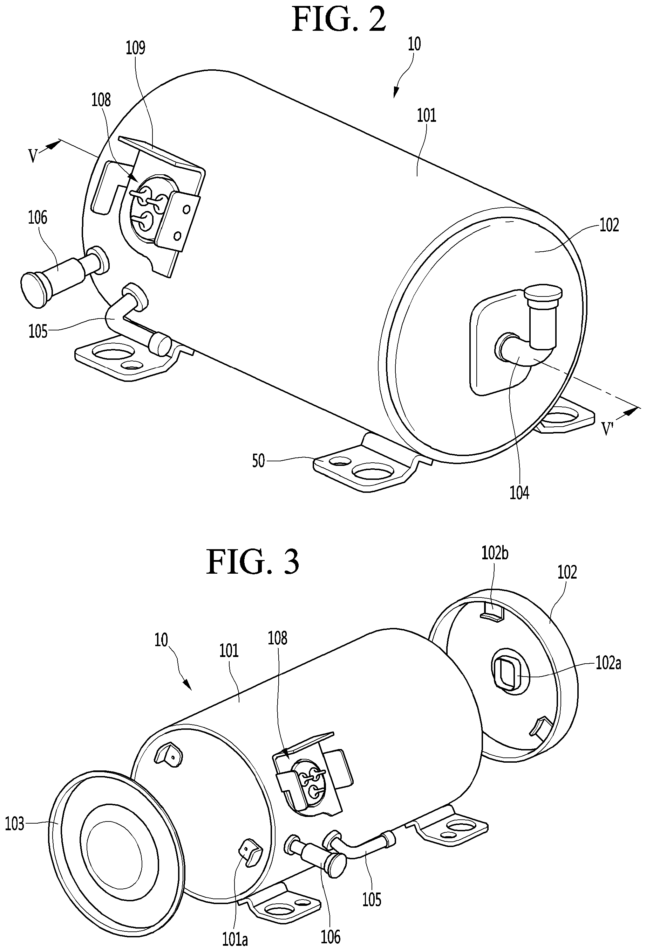

Fig. 2 is a view illustrating an outer appearance of the linear compressor according to an embodiment of the present invention, and Fig. 3 is an exploded view illustrating a shell and a shell cover of the linear compressor according to an embodiment of the present invention.

Referring to Figs. 2 and 3, the linear compressor (hereinafter, the compressor, 10) according to the invention includes a shell 101, and the shell cover 102 and 103 coupled to the shell 101. In a broad sense, the shell covers 102 and 103 may be understood as one configuration of the shell 101.

Legs 50 may be coupled to the lower side of the shell 101. The leg 50 may be coupled to a base of a product on which the compressor 10 is installed. In other words, the leg 50 may be coupled to the machine room 5 of the refrigerator 1 described above.

The shell 101 may have a substantially cylindrical shape and may be an arrangement lying in the transverse direction, or an arrangement lying in the axial direction. Referring to Fig. 2, the shell 101 extends to be long in the horizontal direction and may have a somewhat lower height in the radial direction.
In other words, since the compressor 10 may have a low height when the compressor 10 is installed in the machine room 5 of the refrigerator 1, there is an advantage that the height of the machine room 5 may be reduced. Thereby, the volume of the storage chamber 4 in the cabinet 2 of the same volume can be increased.

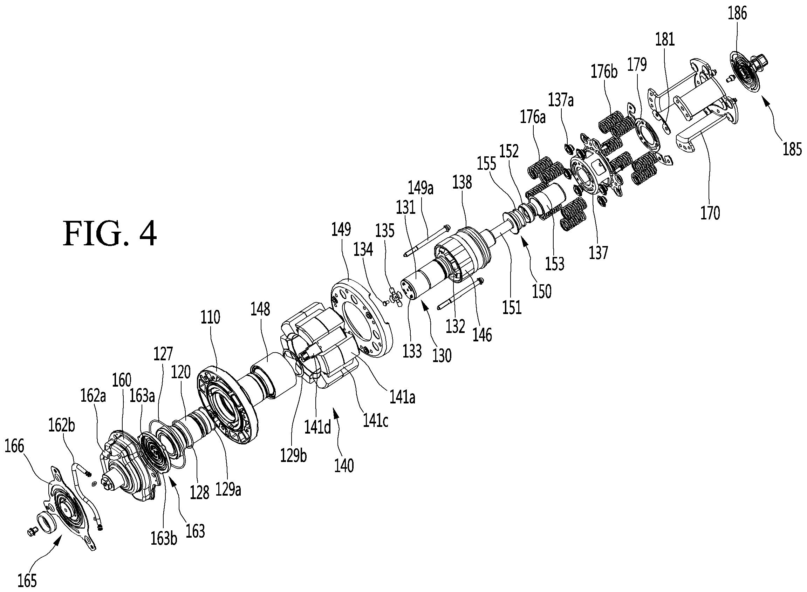

On an outer surface of the shell 101, the terminal 108 may be installed. The terminal 108 is understood as a configuration for delivering external power to the motor assembly 140 (see Fig. 4) of the linear compressor. In particular, the terminal 108 may be connected to a lead wire of the coil 141c (see Fig. 4).

On an outside of the terminal 108, the bracket 109 is installed. A plurality of brackets surrounding the terminal 108 may be included. The bracket 109 may perform a function of protecting the terminal 108 from an external shock or the like.

Both side portions of the shell 101 are configured to be open. The shell covers 102 and 103 may be coupled to both side portions of the opened shell 101. In detail, the shell covers 102 and 103 include a first shell cover 102 coupled to an opened side portion of the shell 101 and a second shell cover 10 coupled to the other opened side portion of the shell 101. By the shell covers 102 and 103, an inner space of the shell 101 may be sealed.

With reference with Fig. 2, the first shell cover 102 may be located at a right side portion of the compressor 10, and the second shell cover 103 may be located at the left side portion of the compressor 10. In other words, the first and second shell covers 102 and 103 may be disposed to face each other.

The compressor 10 further includes a plurality of pipes 104, 105, and 106 provided in the shell 101 or the shell covers 102 and 103 to suction, discharge, or inject refrigerant.

The plurality of pipes 104, 105, and 106 include a suction pipe 104 which allows the refrigerant to be suctioned into an inside of the compressor 10, a discharge pipe 105 which allows the compressed refrigerant to be discharged from the compressor 10, and a process pipe 106 for replenishing the compressor 10 with the refrigerant.

For example, the suction pipe 104 may be coupled to the first shell cover 102. The refrigerant may be suctioned into the compressor 10 in an axial direction through the suction pipe 104.

The discharge pipe 105 may be coupled to an outer circumferential surface of the shell 101. The refrigerant suctioned through the suction pipe 104 may be compressed while flowing in the axial direction. In addition, the compressed refrigerant may be discharged through the discharge pipe 105. The discharge pipe 105 may be disposed at a position closer to the second shell cover 103 than the first shell cover 102.

The process pipe 106 may be coupled to the outer circumferential surface of the shell 101. A worker may inject refrigerant into the compressor 10 through the process pipe 106.

The process pipe 106 may be coupled to the shell 101 at a different height from the discharge pipe 105 to avoid interference with the discharge pipe 105. The height is understood as a distance in a vertical direction (or radial direction) from the leg 50. Since the discharge pipe 105 and the process pipe 106 are coupled to the outer circumferential surface of the shell 101 at different heights, work convenience can be achieved.

At least a portion of the second shell cover 103 may be positioned to be adjacent to an inner circumferential surface of the shell 101, corresponding to a point at which the process pipe 106 is coupled. In other words, at least a portion of the second shell cover 103 may act as a resistance of the refrigerant injected through the process pipe 106.

Therefore, at the viewpoint of a flow path of the refrigerant, the flow path size of the refrigerant flowing through the process pipe 106 is formed to decrease by the second shell cover 103 while entering the inner space of the shell 101 and to increase again while passes through the inner space of the shell 101. In this process, the pressure of the refrigerant may be reduced to vaporize the refrigerant.

On the inner surface of the first shell cover 102, a cover support portion 102a is provided. A second support device 185 to be described below may be coupled to the cover support portion 102a. The cover support portion 102a and the second support device 185 may be understood as a device for supporting a main body of the compressor. Here, the main body of the compressor means a component provided in the shell 101, for example, may include a driving unit for back and forth reciprocating motion and a support portion for supporting the drive unit.

The drive unit may include components such as a piston 130, a magnet frame 138, a permanent magnet 146, a supporter 137, and a suction muffler 150 to be described below. The support portion may include components such as resonant springs 176a and 176b, a rear cover 170, a stator cover 149, a first support device 165, a second support device 185, and the like, which will be described below.

On the inner surface of the first shell cover 102, a stopper 102b may be provided. The stopper 102b is understood as a configuration which prevents the main body of the compressor, in particular, the motor assembly 140, from colliding with the shell 101 and being damaged by vibration or shock generated during transportation of the compressor 10. The stopper 102b is positioned adjacent to the rear cover 170 to be described below, and when the shaking occurs in the compressor 10, the rear cover 170 interferes with the stopper 102b, thereby preventing the shock from being transmitted to the motor assembly 140.

On the inner circumferential surface of the shell 101, a spring fastening portion 101a may be provided. For example, the spring fastening portion 101a may be disposed at a position adjacent to the second shell cover 103. The spring fastening portion 101a may be coupled to the first support spring 166 of the first support device 165 which will be described below. By coupling the spring fastening portion 101a and the first support device 165, the main body of the compressor may be stably supported inside the shell 101.

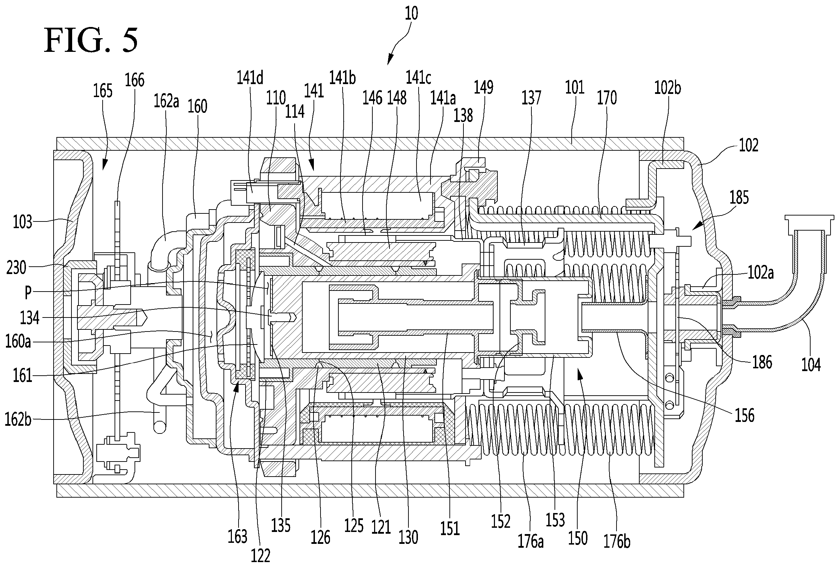

Fig. 4 is an exploded view illustrating a configuration of the linear compressor according to an embodiment of the present invention, and Fig. 5 is a view illustrating a section taken along the line V-V' of Fig. 2.

Referring to Figs. 4 and 5, the compressor 10 according to an embodiment of the present invention includes a cylinder 120, a piston 130 which reciprocates linear movement in the interior of the cylinder 120, and a motor assembly 140 for imparting a driving force to the piston 130.

In addition, the compressor 10 further includes a suction muffler 150 which is connected to the piston 130 and which reduces the noise generated from the refrigerant suctioned through the suction pipe 104. The refrigerant suctioned through the suction pipe 104 flows into the piston 130 through the suction muffler 150. For example, in a process of passing the refrigerant through the suction muffler 150, the flow noise of the refrigerant may be reduced.

The suction muffler 150 includes a plurality of muffler 151, 152, and 153. The plurality of mufflers 151, 152, and 153 include a first muffler 151, a second muffler 152, and a third muffler 153 coupled to each other.

The first muffler 151 is located inside the piston 130, and the second muffler 152 is coupled to the rear side of the first muffler 151. The third muffler 153 may accommodate the second muffler 152 therein and may extend to the rear of the first muffler 151. In view of the flow direction of the refrigerant, the refrigerant suctioned through the suction pipe 104 may pass through the third muffler 153, the second muffler 152, and the first muffler 151 in order. In this process, the flow noise of the refrigerant can be reduced.

A muffler filter (not illustrated) may be positioned at an interface at which the first muffler 151 and the second muffler 152 are coupled to each other. For example, the muffler filter may have a circular shape, and an outer circumferential portion of the muffler filter may be supported between the first and second mufflers 151 and 152.

Hereinafter, for convenience of description, the direction is defined.

The term "axial direction" may be understood as a direction in which the piston 130 reciprocates, that is, a transverse direction in Fig. 5. In the "axial direction", the direction from the suction pipe 104 toward the compression space P, that is, the direction in which the refrigerant flows, is referred to as "front", and the opposite direction thereto is defined as "rear". For example, when the piston 130 moves forward, the compression space P may be compressed.

On the other hand, the "radial direction" is a direction perpendicular to the direction in which the piston 130 reciprocating, it can be understood in the longitudinal direction of Fig. 5.

The piston 130 includes a substantially cylindrical piston main body 131 and a piston flange 132 extending from the piston main body 131 in the radial direction. The piston main body 131 may reciprocate in the cylinder 120, and the piston flange 132 may reciprocate in the outside of the cylinder 120.

In addition, the piston 130 further includes a suction hole 133 through which the refrigerant flows and a suction valve 135 which opens and closes the suction hole 133. The suction hole 133 is formed in a front portion of the piston main body 131.

In addition, the piston 130 further includes a valve fastening member 134 for fastening the suction valve 135 to the piston 130. At this time, the valve fastening member 134 may be coupled to the front portion of the piston main body 131 by passing through the suction valve 135.

The cylinder 120 is provided to receive the piston 130. In detail, the cylinder 120 is configured to receive at least a portion of the first muffler 151 and the piston main body 131. Inside the cylinder 120, a compression space P through which the refrigerant is compressed by the piston 130 is formed.

In addition, the compressor 10 includes a discharge cover 160 and the discharge valve assembly 161 and 163. The discharge cover 160 is installed in front of the compression space P to form a discharge space 160a through which the refrigerant discharged from the compression space P flows. The discharge space 160a includes a plurality of space portions partitioned by the inner wall of the discharge cover 160. The plurality of space portions may be disposed in a front and rear direction and may communicate with each other.

The discharge valve assemblies 161 and 163 are coupled to the discharge cover 160 and selectively discharges the refrigerant compressed in the compression space P. The discharge valve assemblies 161 and 163 include a discharge valve 161 which is opened when the pressure of the compression space P becomes equal to or higher than the discharge pressure to flow refrigerant into the discharge space 160a and a spring assembly 163 provided between the discharge valve 161 and the discharge cover 160 to provide an elastic force in the axial direction.

The spring assembly 163 includes a valve spring 163a and a spring support portion 163b for supporting the valve spring 163a on the discharge cover 160. For example, the valve spring 163a may include a leaf spring. The spring support portion 163b may be injection-molded integrally with the valve spring 163a by an injection process.

The discharge valve 161 is coupled to the valve spring 163a, a rear portion or a rear surface of the discharge valve 161 is positioned to be capable of being supported on the front surface of the cylinder 120. When the discharge valve 161 is supported on the front surface of the cylinder 120, the compression space P is kept closed, and when the discharge valve 161 is spaced apart from the front surface of the cylinder 120, the compression space P is opened, and the compressed refrigerant in the compression space P may be discharged.

In other words, the compression space P is understood as a space formed between the intake valve 135 and the discharge valve 161. In addition, the suction valve 135 is formed at one side of the compression space P, and the discharge valve 161 can be provided on the other side of the compression space P, that is, on the opposite side of the suction valve 135.

In the process of reciprocating linear movement of the piston 130 in the interior of the cylinder 120, when the pressure of the compression space P is equal to or lower than the suction pressure, the suction valve 135 is opened and the refrigerant is suctioned into the compression space P. On the other hand, when the pressure of the compression space P is equal to or higher than the suction pressure, the refrigerant in the compression space P is compressed in a state where the suction valve 135 is closed.

On the other hand, when the pressure of the compression space P is equal to or higher than the discharge pressure, the valve spring 163a is deformed forward while opening the discharge valve 161, the refrigerant is discharged from the compression space P and is discharged to the discharge space of the discharge cover 160. When the discharge of the refrigerant is completed, the valve spring 163a provides a restoring force to the discharge valve 161 so that the discharge valve 161 is closed.

In addition, the cover pipe 162a is coupled to the discharge cover 160 to discharge the refrigerant flowing in the discharge space 160a of the discharge cover 160. For example, the cover pipe 162a may be made of a metal material.

In addition, the loop pipe 162b is further coupled to the cover pipe 162a to transfer the refrigerant flowing through the cover pipe 162a to the discharge pipe 105. One side of the roof pipe 162b may be coupled to the cover pipe 162a and the other side thereof may be coupled to the discharge pipe 105.

The loop pipe 162b is made of a flexible material and may be formed to be relatively long. In addition, the roof pipe 162b may extend roundly from the cover pipe 162a along the inner circumferential surface of the shell 101 to be coupled to the discharge pipe 105. For example, the loop pipe 162b may have a wound shape.

In addition, the compressor 10 further includes a frame 110. The frame 110 is understood as a configuration for fixing the cylinder 120. For example, the cylinder 120 may be press fitting inside the frame 110. The cylinder 120 and the frame 110 may be made of aluminum or an aluminum alloy material.

The frame 110 is disposed to surround the cylinder 120. In other words, the cylinder 120 may be positioned to be received inside the frame 110. In addition, the discharge cover 160 may be coupled to the front surface of the frame 110 by a fastening member.

The cylinder 120 includes a cylinder main body 121 extending in the axial direction and a cylinder flange 122 provided outside the front portion of the cylinder main body 121. The cylinder main body 121 has a cylindrical shape having a central axis in the axial direction and is inserted into the frame 110. Therefore, the outer circumferential surface of the cylinder main body 121 may be positioned to face the inner circumferential surface of the frame 110.

The motor assembly 140 includes an outer stator 141 fixed to the frame 110 and disposed to surround the cylinder 120, an inner stator 148 spaced apart from the inside of the outer stator 141, and the permanent magnet 146 positioned in the space between the outer stator 141 and the inner stator 148.

The permanent magnet 146 may linearly reciprocate by the mutual electromagnetic force between the outer stator 141 and the inner stator 148. In addition, the permanent magnet 146 may be composed of a single magnet having one pole or configured by combining a plurality of magnets having three poles.

The permanent magnet 146 may be installed in the magnet frame 138. The magnet frame 138 has a substantially cylindrical shape and may be disposed to be inserted into a space between the outer stator 141 and the inner stator 148.

In detail, with reference to the sectional view of Fig. 5, the magnet frame 138 can be coupled to the piston flange 132, extend in an outer radial direction, and be bent forward. The permanent magnet 146 may be installed in the front portion of the magnet frame 138. Accordingly, when the permanent magnet 146 reciprocates, the piston 130 may reciprocate in the axial direction together with the permanent magnet 146.

The outer stator 141 includes coil winding bodies 141b, 141c, and 141d and a stator core 141a. The coil winding bodies 141b, 141c, and 141d include a bobbin 141b and a coil 141c wound in a circumferential direction of the bobbin 141b. The coil winding bodies 141b, 141c, and 141d further include a terminal portion 141d for guiding a power line connected to the coil 141c to be drawn or exposed to the outside of the outer stator 141.

The stator core 141a includes a plurality of core blocks formed by stacking a plurality of laminations in the circumferential direction. The plurality of core blocks may be disposed to surround at least a portion of the coil winding bodies 141b, 141c, and 141d.

A stator cover 149 is provided on one side of the outer stator 141. In other words, one side portion of the outer stator 141 may be supported by the frame 110, and the other side portion thereof may be supported by the stator cover 149.

The stator cover 149 and the frame 110 is fastened by a cover fastening member 149a. The cover fastening member 149a extends forward toward the frame 110 through the stator cover 149 and may be coupled to a fastening hole provided in the frame 110.

The inner stator 148 is fixed to the outer circumference of the frame 110. In addition, the inner stator 148 is configured by stacking a plurality of laminations in the circumferential direction from the outside of the frame 110.

In summary, as a predetermined current is applied to the coil 141c, the outer stator 141 and the inner stator 148 may form an electric field. In addition, by such an electric field, the permanent magnet 146 is given an electromagnetic force and can be reciprocated in the axial direction with the piston 130.

At this time, the reciprocating speed and distance of the permanent magnet 146 may be changed according to the current value applied to the coil 141c. In other words, the movement of the piston 130 may be changed according to the current value applied to the motor assembly 140. This will be described below in detail.

The compressor 10 further includes a supporter 137 supporting the piston 130. The supporter 137 may be coupled to the rear side of the piston 130, and the suction muffler 150 may be disposed in the supporter to pass through the supporter. The piston flange 132, the magnet frame 138, and the supporter 137 may be fastened by a fastening member.

Balance weight 179 may be coupled to the supporter 137. The weight of the balance weight 179 may be determined based on the operating frequency range of the compressor main body.

The compressor 10 further includes a rear cover 170 coupled to the stator cover 149, extending rearward, and supported by the second support device 185.

In detail, the rear cover 170 includes three support legs, and the three support legs may be coupled to the rear surface of the stator cover 149. A spacer 181 may be interposed between the three support legs and the rear surface of the stator cover 149. The distance from the stator cover 149 to the rear end portion of the rear cover 170 may be determined by adjusting the thickness of the spacer 181. The rear cover 170 may be spring-supported to the supporter 137.

The compressor 10 further includes an inflow guide portion 156 coupled to the rear cover 170 to guide the inflow of the refrigerant into the suction muffler 150. At least a portion of the inflow guide portion 156 may be inserted into the suction muffler 150.

The compressor 10 further includes a plurality of resonant springs 176a and 176b whose natural frequencies are adjusted to allow the piston 130 to resonate.

The plurality of resonant springs 176a and 176b include a first resonant spring 176a which is supported between the supporter 137 and the stator cover 149 and a second resonant spring 176b which is supported between the supporter 137 and the rear cover 170. By the action of the plurality of resonant springs 176a and 176b, the stable movement of the drive unit reciprocating inside the compressor 10 is performed and it is possible to reduce the vibration or noise generated by the movement of the drive unit.

The supporter 137 includes a first spring support portion 137a coupled to the first resonant spring 176a.

The compressor 10 includes a plurality of sealing members 127, 128, 129a, and 129b for increasing the coupling force between the frame 110 and the components around the frame 110.

In detail, the plurality of sealing members 127, 128, 129a, and 129b include a first sealing member 127 provided at a portion at which the frame 110 and the discharge cover 160 are coupled to each other. The first sealing member 127 may be disposed in the first installation groove of the frame 110.

The plurality of sealing members 127, 128, 129a, and 129b further include a second sealing member 128 provided at a portion at which the frame 110 and the cylinder 120 are coupled to each other. The second sealing member 128 may be disposed in a second installation groove of the frame 110.

The plurality of sealing members 127, 128, 129a, and 129b further include a third sealing member 129a provided between the cylinder 120 and the frame 110. The third sealing member 129a may be disposed in a cylinder groove formed in the rear portion of the cylinder 120. The third sealing member 129a can perform functions of preventing leakage of the refrigerant in the gas pocket formed between the inner circumferential surface of the frame and the outer circumferential surface of the cylinder to the outside and increasing the coupling force between the frame 110 and the cylinder 120.

The plurality of sealing members 127, 128, 129a, and 129b further include a fourth sealing member 129b provided at a portion at which the frame 110 and the inner stator 148 are coupled to each other. The fourth sealing member 129b may be disposed in the third installation groove of the frame 110. The first to fourth sealing members 127, 128, 129a, and 129b may have a ring shape.

In addition, the compressor 10 further includes a first support device 165 for supporting one side of the main body of the compressor 10 and a second support device 185 for supporting the other side of the main body of the compressor (10).

The first support device 165 may be disposed adjacent to the second shell cover 103 and coupled to the discharge cover 160 to elastically support the main body of the compressor 10. In addition, the second support device may be coupled to the first shell cover 102 and the rear cover 170 to elastically support the main body of the compressor 10.

In detail, the first support device 165 includes a first support spring 166 coupled to the spring fastening portion 101a described with reference to Fig. 3. In addition, the second support device 185 includes a second support spring 186 coupled to the cover support portion 102a described with reference to Fig. 3.

In addition, the compressor 10 according to the spirit of the present invention includes a bearing flow path formed so that the bearing refrigerant is supplied to the piston 130. The bearing refrigerant refers to a refrigerant supplied to the piston 130 to function as a bearing. In other words, the compressor 10 corresponds to an oilless compressor using a refrigerant without adding a lubricant such as oil.

At this time, the bearing refrigerant corresponds to some of the refrigerant compressed by the piston 130. In detail, the refrigerant compressed by the piston 130 is discharged to the compression space P. At this time, some refrigerant (bearing refrigerant) may be supplied to the piston 130 through the frame 110 and the cylinder 120.

Accordingly, the bearing flow path includes cylinder bearing flow paths 125 and 126 formed in the cylinder 120 and a frame bearing flow path 114 formed in the frame 110. In other words, at least some of the refrigerant compressed by the piston 130 may flow into the cylinder bearing flow paths 125 and 126 and the frame bearing flow path 114 to be supplied to the piston.

The frame bearing flow path 114 is formed through the frame 110. In detail, the frame bearing flow path 114 extends from the front surface of the frame 110 to the outer circumferential surface of the cylinder 120. Referring to Fig. 5, it may be understood that the frame bearing flow path 114 is formed obliquely in the axial direction.

The cylinder bearing flow path includes a gas inlet 126 and a cylinder nozzle 125.

The gas inlet 126 is formed to be recessed radially inward from the outer circumferential surface of the cylinder main body 121. In addition, the gas inlet 126 may be configured to have a circular shape along the outer circumferential surface of the cylinder main body 121 based on an axial center axis. A plurality of the gas inlets 126 may be provided. For example, two gas inlets 126 may be provided in a state of being spaced apart in the axial direction.

The cylinder nozzle 125 is formed extending from the gas inlet 126 to the inner peripheral surface of the cylinder main body 121. In particular, the cylinder nozzle 125 may extend radially inward from the gas inlet 126. At this time, the cylinder nozzle 125 is formed very narrow to adjust the amount of the refrigerant flow.
In detail, the bearing refrigerant corresponds to some of the refrigerant flowing through the compressor 10. Thus, if the amount of the bearing refrigerant is too large, the amount of refrigerant compressed by the compressor 10 is reduced. Therefore, the amount of the bearing refrigerant can be properly adjusted through the cylinder nozzle 125 or the like.

In addition, a gas pocket may be formed between the cylinder 120 and the frame 110. In detail, a predetermined bearing refrigerant may flow between the outer circumferential surface of the cylinder main body 121 and the inner circumferential surface of the frame 110. Accordingly, the refrigerant flowing along the frame bearing flow path 114 may flow to the gas inlet 126.

The refrigerant passing through the gas inlet 126 flows into the space between the inner circumferential surface of the cylinder main body 121 and the outer circumferential surface of the piston main body 131 through the cylinder nozzle 125. The bearing refrigerant provides a floating force to the piston 130 to perform a function of a gas bearing for the piston 130.

In detail, the bearing refrigerant may be supplied to the outer circumferential surface of the piston 130 to space apart the piston 130 from the cylinder 120. Accordingly, friction between the cylinder 120 and the piston 130 may be minimized during the movement of the piston 130.

At this time, according to the ambient temperature of the compressor 10, the bearing refrigerant may not provide a sufficient floating force to the piston 130. Accordingly, a large problem may occur such that breakage of the piston 130 or the like occurs.

Therefore, the compressor 10 according to the spirit of the present invention is controlled to prevent such a problem. This will be described in detail below.

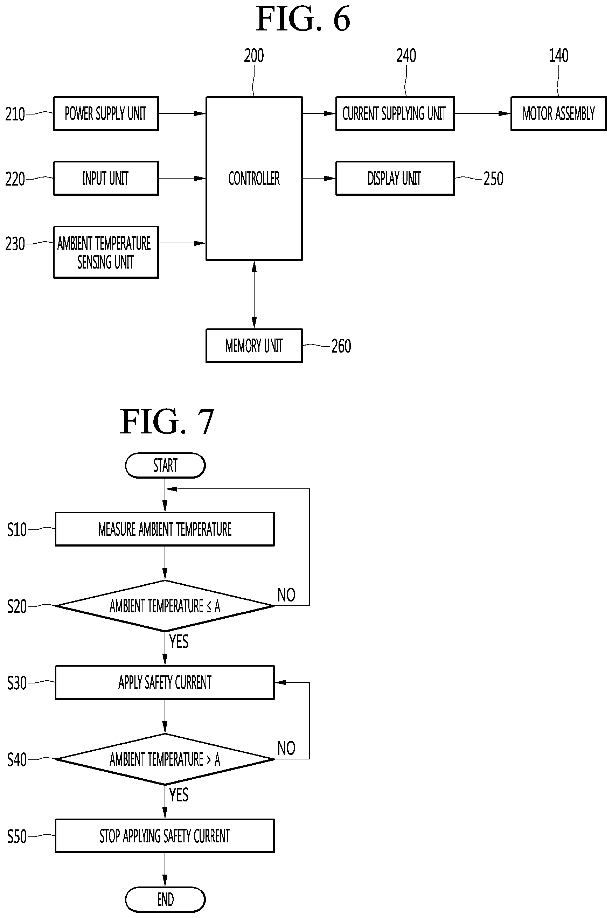

Fig. 6 is a view illustrating a control configuration of a linear compressor according to an embodiment of the present invention.

As illustrated in Fig. 6, the compressor 10 according to the present invention includes a controller 200 for controlling various configurations. In addition, the compressor 10 includes a power supply unit 210 and an input unit 220 for transmitting a predetermined signal to the controller 200.

The power supply unit 210 may transmit the ON/OFF signal of the compressor 10 to the controller 200. For example, the power supply unit 210 may correspond to a code connected to an external power source or a signal input by a user. According to a signal from the power supply unit 210, the controller 200 may apply and stop applying current to the motor assembly 140.

The input unit 220 may deliver various information necessary for the operation to the controller 200. For example, the input unit 220 may include temperature information of a place where the compressor 10 is installed. In addition, the input unit 220 may be understood as a device having a function of transmitting various information such as humidity and load to the controller 200.

In addition, the compressor 10 may include a memory unit 260 for storing predetermined information and a display unit 250 for displaying predetermined information.

The memory unit 260 may be understood as a device in which information necessary for the operation of the compressor 10 is stored. For example, the memory unit 260 may store information about a current applied to the motor assembly 140.

The display unit 250 may be understood as a device which provides information related to the operation of the compressor 10. In particular, the display unit 250 may manage the malfunction of the compressor 10, or the like by displaying the operation information of the compressor 10 to a user or an administrator.

In addition, the compressor 10 may include the ambient temperature sensing unit 230. The ambient temperature sensing unit 230 may be understood as a device for measuring the ambient temperature. At this time, the ambient temperature may correspond to an external temperature of the shell 101. In other words, the ambient temperature may be understood as the temperature of the place where the compressor 10 is installed.

The ambient temperature sensing unit 230 may include a predetermined temperature sensor. The temperature sensor may be attached to the outside of the shell 101 or disposed in a device in which the compressor 10 is installed.

In addition, the compressor 10 includes a current supply unit 240 for supplying a predetermined current to the motor assembly 140. In other words, the controller 200 may apply a predetermined current to the motor assembly 140 through the current supply unit 240. The current supply unit 240 may correspond to a device for supplying current to the coil 141c through the terminal 108 described above.

At this time, the controller 200 may determine a current value applied to the motor assembly 140 according to the ambient temperature measured by the ambient temperature sensitive unit 230. This will be described in detail below.

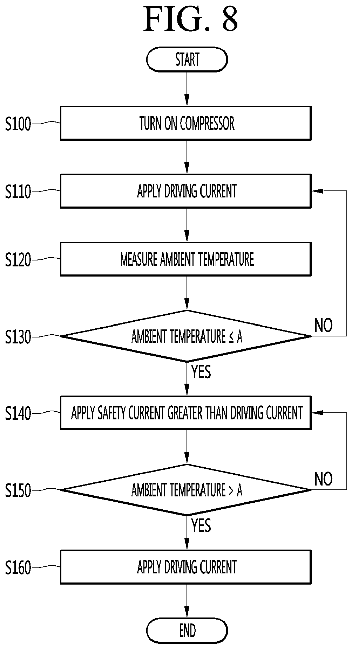

Figs. 7 and 8 are views illustrating the control flow of the linear compressor according to an embodiment of the present invention. Fig. 8 illustrates a state where the compressor 10 is turned on and may be understood as the exemplary situation of Fig. 7.

As illustrated in Fig. 7, the ambient temperature is measured (S10). Then, it is determined whether the ambient temperature is equal to or lower than a preset safety temperature A (S20). The safety temperature A may be understood as a value stored in the memory unit 260 at a predetermined temperature value. For example, the safety temperature A may be 10 degrees.

When the ambient temperature is equal to or lower than the safety temperature A, the safety current S is applied to the motor assembly 140 (S30). The safety current S may be understood as a value stored in the memory unit 260 at a predetermined current value. For example, the safety current S may be 1.5A.

The ambient temperature is measured and it is determined whether the measured ambient temperature is higher than the safety temperature A (S40). When the ambient temperature is higher than the safety temperature A, the application of the safety current S to the motor assembly 140 is stopped (S50).

In summary, if the ambient temperature is continuously measured, and the measured ambient temperature is equal to or lower than the safety temperature A, the safety current S is applied. When the measured ambient temperature becomes higher than the safety temperature A, the application of the safety current S is stopped.

At this time, when the compressor 10 is in the OFF state, the safety current S is applied when the measured ambient temperature is equal to or lower than the safety temperature A. When the measured ambient temperature is higher than the safety temperature A, the application of the safety current S is stopped and the compressor 10 is turned off.

As illustrated in Fig. 8, when the compressor 10 is in an ON state (S100), a driving current D is applied to the motor assembly 140 (S110). The driving current D corresponds to a predetermined current value and corresponds to a current value higher than the minimum applied current m and lower than the maximum applied current M (m <M) (m <D <M).

In other words, when the drive current D is operated at the minimum applied current m, it can be understood that the compressor 10 is operated at the minimum output. In addition, when the driving current D is operated at the maximum applied current M, it can be understood that the compressor 10 is operated at the maximum output.

At this time, the maximum applied current M corresponds to a current value smaller than the safety current S (M <S). For example, the safety current S is 1.5A, the maximum applied current M may be 1A. Accordingly, the driving current D corresponds to a value smaller than 1A.

The current value applied to the motor assembly 140 may affect a top dead center TDC, a bottom dead center BCD of the piston 130, and a stroke distance corresponding to a distance between the top dead center and the bottom dead center. In detail, the greater the current value applied, the longer the stroke distance.

Accordingly, when the safety current S is applied than when the maximum applied current M is applied to the motor assembly 140, the piston 130 is moved longer in the axial direction.

In detail, when the maximum applied current M is applied to the motor assembly 140, the top dead center of the piston 130 is referred to as the maximum top dead center M_TDC, the bottom dead center is referred to as the maximum bottom dead center M_BDC. In addition, the distance between the maximum top dead center M_TDC and the maximum bottom dead center M BDC is referred to as a maximum stroke distance.

In addition, when the safety current S is applied to the motor assembly, the top dead center of the piston 130 is referred to as a safety top dead center S_TDC, the bottom dead center is referred to as a safety bottom dead center S_BDC. In addition, the distance between the safety top dead center S_TDC and the safety bottom dead center S BDC is referred to as the safety stroke distance.

As the safety current S corresponds to a current value greater than the maximum applied current M, the stable stroke distance is longer than the maximum stroke distance. In other words, the safety top dead center S_TDC is located axially ahead of the maximum top dead center M_TDC, and the safety bottom dead center S BDC is located axially rearward of the maximum bottom dead center M BDC.
The ambient temperature (S120) is measured, and it is determined whether the ambient temperature is equal to or lower than the safety temperature A (S130). When the ambient temperature is equal to or lower than the safety temperature A, the safety current S is applied to the motor assembly 140 (S140). As described above, the safety current S corresponds to a current value greater than the driving current D.

If the measured ambient temperature is higher than the safety temperature A (S150), the driving current D is applied to the motor assembly 140 (S160).

In summary, regardless of the ON/OFF of the compressor 10, when the ambient temperature is equal to or lower than the safety temperature A, the safety current S is applied to the motor assembly 140. Then, when the ambient temperature is higher than the safety temperature (A), it is driven back to its original state.

At this time, when the safety current S is applied, the coil 141d is heated. In detail, the safety current S applies a current value greater than the maximum applied current M designed to produce the maximum output, thereby inducing heat generation of the coil 141d. In other words, the safety current S is applied not for the purpose of compressing the refrigerant but for the purpose of heating.

This is to reduce the amount of refrigerant flowing as the ambient temperature is lowered and to prevent problems caused as the temperature is lowered.

When the ambient temperature is lowered, the compressor 10 is generally turned off or operated at low output. As a result, the amount of refrigerant compressed by the compressor 10 decreases and the amount of the bearing refrigerant decreases. Accordingly, the bearing refrigerant may not be secured in sufficient amount to provide the floating force to the piston 130.

In addition, when the ambient temperature is lowered, the temperature of the bearing refrigerant is also lowered. In particular, when the compressor 10 is turned off for a long time, the temperature of the bearing refrigerant may be very low. Accordingly, the bearing refrigerant can be condensed, and the bearing flow path can be blocked by the condensed bearing refrigerant.

In particular, since the cylinder nozzle 125 is formed in a very narrow flow path, the cylinder nozzle 125 can be closed even with a small amount of condensation refrigerant. Accordingly, the bearing refrigerant may not flow to the piston 130.

Therefore, when the ambient temperature is very low, the safety current S is applied to heat the coil 141d. Accordingly, the bearing refrigerant is expanded to provide sufficient floating force to the piston 130 and to prevent condensation thereof.

However, this is merely exemplary and is not limited thereto. For example, the heating unit may be provided at one side of the shell 101 to transfer heat to the bearing refrigerant.

Hereinafter, a case where such a compressor 10 is provided in the refrigerator will be described.

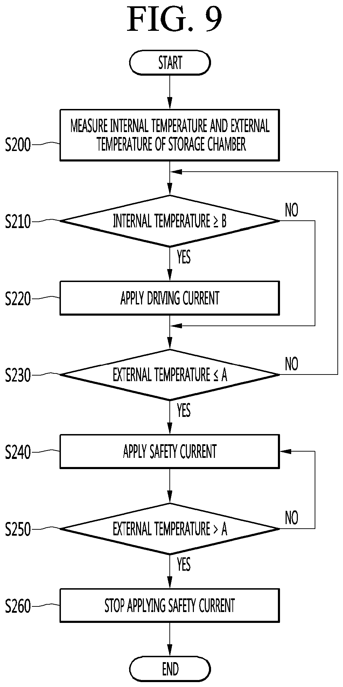

Fig. 9 is a view illustrating a control flow of a refrigerator having a linear compressor according to an embodiment of the present invention.

As illustrated in Fig. 9, the internal temperature and the external temperature of the storage chamber 4 are measured (S200). At this time, the refrigerator 1 includes an internal temperature sensor installed inside the storage chamber 4 and an external temperature sensor installed outside the storage chamber 4. For example, the external temperature sensor may be installed in a hinge provided to allow the refrigerator door 3 to be rotatably coupled to the cabinet 2.

Referring to Fig. 7, the internal temperature sensor may correspond to the input unit 220, and the external temperature sensor may correspond to the ambient temperature sensing unit 230. In other words, the external temperature of the storage chamber 4 corresponds to the ambient temperature. Hereinafter, for convenience of explanation, the ambient temperature is described as an external temperature.

It is determined whether the internal temperature is equal to or higher than the preset a temperature B inside the refrigerator (S210). The temperature B inside the refrigerator may be understood as a value stored in the memory unit 260 at a predetermined temperature value. In addition, the high temperature B may correspond to a value input by the user to the input unit 220. Generally, the temperature B inside the refrigerator is determined as an initial value by the memory unit 260 and provided to be changeable through the input unit 220.

When the internal temperature is higher than the preset internal temperature B, the driving current D is applied (S220). As described above, the driving current D corresponds to a current value greater than the minimum applied current m and smaller than the maximum applied current M (m<M) (m<D<M).

It is determined whether the external temperature is lower than a preset safety temperature A (S230). When the external temperature is equal to or lower than the preset safety temperature A, the safety current S is applied (S240). As described above, the safety current S corresponds to a current value greater than the maximum applied current M (M <S).

In addition, if the measured external temperature is higher than the safety temperature (A), the application of the safety current S to the motor assembly 140 is stopped (S260).

In summary, when the measured external temperature is equal to or lower than the safety temperature A, the safety current S is applied regardless of the internal temperature. When the measured outside temperature is higher than the safety temperature A, when the measured inside temperature is equal to or higher than the temperature B inside the refrigerator, the driving current D is applied. When the measured internal temperature is lower than the temperature B inside the refrigerator, the driving of the compressor 10 is stopped.

At this time, in general, as the external temperature of the storage chamber 4 is higher, the output of the compressor 10 is increased. This is because a high external temperature causes a lot of heat loss and the required cold power.

Therefore, the refrigerator 1 according to the spirit of the present invention also increases the output of the compressor 10 as the external temperature of the storage chamber 4 is higher. In other words, the higher the measured external temperature, the higher the current value applied to the compressor 10. In other words, the lower the measured external temperature, the lower the current value applied to the compressor 10.

However, when the external temperature is very low, the current value applied to the compressor 10 is increased to secure the bearing refrigerant. In other words, the external temperature and the applied current value are proportional to each other, but when the temperature is lower than a specific temperature, the current value is rapidly increased. The relationship between the external temperature and the current value is described on the assumption that there is no change in other conditions.

Through such control, it is possible to ensure a sufficient bearing refrigerant even when the external temperature is very low. Accordingly, damage to the piston 130 and its surrounding components can be prevented.

According to the present invention, even when the external temperature is very low, there is an advantage that the linear compressor and the refrigerator can be controlled so that the bearing refrigerant smoothly functions as a bearing.

Accordingly, there is an advantage that the bearing refrigerant does not function as a bearing, the bearing flow path is closed or sufficient floating force is not provided to the piston, thereby preventing the piston from being damaged.

In particular, when the external temperature is very low, there is an advantage that the bearing refrigerant can be expanded by heating the coil by applying a safety current higher than the maximum driving current that is generally driven.

In addition, by applying the safety current according to the external temperature regardless of the ON/OFF of the linear compressor, there is an advantage that the stability can be ensured even when the compressor is off.

## Claims

1. A method for controlling a linear compressor (10) including a piston (130), and a motor assembly (140) for driving the piston (130), wherein the motor assembly (140) includes:
an outer stator (141) having a coil to which current is applied,
an inner stator (148) disposed inside the outer stator (141), and
a permanent magnet (146) disposed movably inside the outer stator (141) and the inner stator (148), wherein the permanent magnet (146) is connected to the piston (130);
wherein the linear compressor (10) further includes a bearing flow path configured to supply bearing refrigerant to the piston (130);
the method comprising:
measuring an ambient temperature;
when the measured ambient temperature is equal to or lower than a preset safety temperature, applying a safety current (S) to the motor assembly (140) for driving the piston (130); and
when the measured ambient temperature is higher than the safety temperature, applying a drive current (D) lower than the safety current (S) to the motor assembly (140);
wherein when the safety current is applied to the coil, the bearing refrigerant is expanded by the heat generated in the coil.

2. The method of claim 1, further comprising:
turning on the linear compressor (10) and applying a drive current to the motor assembly (140) before measuring the ambient temperature;
wherein after measuring the ambient temperature, when the measured ambient temperature is higher than the safety temperature, the driving current D is continuously applied to the motor assembly (140).

3. The method according to any one of the preceding claims, further comprising:
after applying the safety current to the motor assembly (140), measuring the ambient temperature again,
wherein when the measured ambient temperature is equal to or lower than the safety temperature, continuously applying the safety current to the motor assembly (140), and
when the measured ambient temperature is higher than the safety temperature, applying the drive current to the motor assembly (140).

4. The method according to any one of the preceding claims, wherein the drive current (D) applied to the motor assembly (140) is greater than a minimum applied current and smaller than a maximum applied current, the maximum applied current being smaller than the safety current, and/or
wherein a maximum applied current corresponds to a maximum output of the linear compressor (10), and/or
wherein a minimum applied current corresponds to a minimum output of the linear compressor (10).

5. The method according to any one of the preceding claims, wherein a maximum applied current corresponds to a current value of the drive current to reciprocate the piston (130) with a maximum stroke distance between a maximum top dead center (M TDC) and a maximum bottom dead center (M_BDC).

6. The method according to any one of the preceding claims, wherein the safety current has a value to reciprocate the piston (130) with a safety stroke distance between a safety top dead center (S_TDC) and a safety bottom dead center (S_BDC).

7. The method according to claim 6 when depending on claim 5, wherein the safety stroke distance is longer than the maximum stroke distance.

8. The method according to any one of the preceding claims , further comprising:
turning off the linear compressor (10) and measuring the ambient temperature,
when the measured ambient temperature is equal to or lower than the safety temperature, applying a safety current to the motor assembly (140), and
after applying the safety current, measuring the ambient temperature:
when the measured ambient temperature is equal to or lower than the safety temperature, continuously applying the safety current to the motor assembly (140), and
when the measured ambient temperature is higher than the safety temperature, stopping applying the safety current to the motor assembly (140).

9. The method according to any one of the preceding claims,
wherein the bearing flow path includes a cylinder bearing flow path (125, 126) formed in a cylinder (120), in which the piston (130) is received, and a frame bearing flow path (114) formed in a frame (110), in which the cylinder (120) is received,
wherein the piston (130) is reciprocated by the motor assembly (140) to compress refrigerant, and
wherein at least some of the compressed refrigerant flows into the cylinder bearing flow path (125, 126) and the frame bearing flow path (114) and is supplied to the piston (130).

10. The method according to any one of the preceding claims,
wherein the ambient temperature corresponds to an outer temperature of a shell (101) in which the piston (130) is received and to which a suction pipe (104) and a discharge pipe (105) are coupled in which the refrigerant flows.

11. The method according to any one of the preceding claims,
wherein the safety temperature is 10 degrees.

12. A method for controlling a refrigerator (1) having a storage chamber (4) and being equipped with the linear compressor (10), the method comprising the method for controlling the linear compressor according to any one of the preceding claims, and further the steps of:
measuring an internal temperature of the storage chamber (4),
when the measured internal temperature is equal to or higher than a preset temperature in the refrigerator (1), applying the driving current to the linear compressor (10) .

13. The method of claim 12, further comprising:
only applying the safety current to the linear compressor (10), when the measured ambient temperature is equal to or lower than the safety temperature and the measured internal temperature is equal to or higher than the preset temperature in the refrigerator (1),.

14. The method of claim 12 or 13, further comprising:
only applying the driving current to the linear compressor (10), when the measured ambient temperature is higher than the safety temperature and the measured internal temperature is equal to or higher than the temperature in the refrigerator (1),
wherein the higher the external temperature, the greater the current value of the driving current is set.

## Patentansprüche

1. Verfahren zum Steuern eines Linearverdichters (10), der einen Kolben (130) und eine Motoranordnung (140) zum Antreiben des Kolbens (130) enthält,
wobei die Motoranordnung (140) Folgendes enthält:
einen äußeren Stator (141), der eine Spule aufweist, an die ein Strom angelegt wird,
einen inneren Stator (148), der innerhalb des äußeren Stators (141) angeordnet ist, und
einen Permanentmagneten (146), der innerhalb des äußeren Stators (141) und des inneren Stators (148) beweglich angeordnet ist, wobei der Permanentmagnet (146) mit dem Kolben (130) verbunden ist;
wobei der Linearverdichter (10) ferner einen Lagerdurchflussweg enthält, der konfiguriert ist, dem Kolben (130) Lagerkühlmittel zuzuführen;
wobei das Verfahren Folgendes umfasst:
Messen einer Umgebungstemperatur;
dann, wenn die gemessene Umgebungstemperatur kleiner oder gleich einer voreingestellten Sicherheitstemperatur ist, Anlegen eines Sicherheitsstroms (S) an die Motoranordnung (140), um den Kolben (130) anzutreiben; und
dann, wenn die gemessene Umgebungstemperatur größer ist als die Sicherheitstemperatur, Anlegen eines Antriebsstroms (D), der niedriger ist als der Sicherheitsstrom (S), an die Motoranordnung (140);
wobei dann, wenn der Sicherheitsstrom an die Spule angelegt wird, das Lagerkühlmittel durch die in der Spule erzeugte Wärme expandiert wird.

2. Verfahren nach Anspruch 1, das ferner Folgendes umfasst:
Einschalten des Linearverdichters (10) und Anlegen eines Antriebsstroms an die Motoranordnung (140) vor dem Messen der Umgebungstemperatur;
wobei nach dem Messen der Umgebungstemperatur dann, wenn die gemessene Umgebungstemperatur größer ist als die Sicherheitstemperatur, der Antriebsstrom (D) kontinuierlich an die Motoranordnung (140) angelegt wird.

3. Verfahren nach einem der vorhergehenden Ansprüche, das ferner Folgendes umfasst:
nach dem Anlegen des Sicherheitsstroms an die Motoranordnung (140) erneutes Messen der Umgebungstemperatur,
dann, wenn die gemessene Umgebungstemperatur kleiner oder gleich der Sicherheitstemperatur ist, kontinuierliches Anlegen des Sicherheitsstroms an die Motoranordnung (140) und
dann, wenn die gemessene Umgebungstemperatur größer ist als die Sicherheitstemperatur, Anlegen des Antriebsstroms an die Motoranordnung (140).

4. Verfahren nach einem der vorhergehenden Ansprüche, wobei der Antriebsstrom (D), der an die Motoranordnung (140) angelegt wird, größer als ein minimaler angelegter Strom und kleiner als ein maximal angelegter Strom ist, wobei der maximal angelegte Strom kleiner als der Sicherheitsstrom ist, und/oder
wobei ein maximaler angelegter Strom einer maximalen Ausgabe des Linearverdichters (10) entspricht, und/oder
wobei ein minimaler angelegter Strom einer minimalen Ausgabe des Linearverdichters (10) entspricht.

5. Verfahren nach einem der vorhergehenden Ansprüche, wobei ein maximaler angelegter Strom einem aktuellen Wert des Antriebsstroms entspricht, um den Kolben (130) mit einer maximalen Hubstrecke zwischen einem maximalen oberen Totpunkt (M_TDC) und einem maximalen unteren Totpunkt (M_BDC) hin- und herzubewegen.

6. Verfahren nach einem der vorhergehenden Ansprüche, wobei der Sicherheitsstrom einen Wert aufweist, um den Kolben (130) mit einer Sicherheitshubstrecke zwischen einem oberen Sicherheitstotpunkt (S_TDC) und einem unteren Sicherheitstotpunkt (S_BDC) hin- und herzubewegen.

7. Verfahren nach Anspruch 6 wenn abhängig von Anspruch 5, wobei die Sicherheitshubstrecke länger ist als die maximale Hubstrecke.

8. Verfahren nach einem der vorhergehenden Ansprüche, das ferner Folgendes umfasst:
Abschalten des Linearverdichters (10) und Messen der Umgebungstemperatur, dann, wenn die gemessene Umgebungstemperatur kleiner oder gleich der Sicherheitstemperatur ist, Anlegen eines Sicherheitsstroms an die Motoranordnung (140), und
nach dem Anlegen eines Sicherheitsstroms, Messen der Umgebungstemperatur:
dann, wenn die gemessene Umgebungstemperatur kleiner oder gleich der Sicherheitstemperatur ist, kontinuierliches Anlegen des Sicherheitsstroms an die Motoranordnung (140), und
dann, wenn die gemessene Umgebungstemperatur größer ist als die Sicherheitstemperatur, Beenden des Anlegens des Sicherheitsstroms an die Motoranordnung (140).

9. Verfahren nach einem der vorhergehenden Ansprüche,
wobei der Lagerdurchflussweg einen Zylinderlagerdurchflussweg (125, 126), der in einem Zylinder (120) gebildet ist, in dem der Kolben (130) aufgenommen wird, und einen Rahmendurchflussweg (114), der in einem Rahmen (110) gebildet ist, in dem der Zylinder (120) aufgenommen wird, enthält,
wobei der Kolben (130) durch die Motoranordnung (140) hin- und herbewegt wird, um Kühlmittel zu verdichten, und
wobei zumindest ein kleiner Teil des verdichteten Kühlmittels in den Zylinderlagerdurchflussweg (125, 126) und den Rahmendurchflussweg (114) fließt und dem Kolben (130) zugeführt wird.

10. Verfahren nach einem der vorhergehenden Ansprüche,
wobei die Umgebungstemperatur einer Außentemperatur einer Hülle (101) entspricht, in die der Kolben (130) aufgenommen wird, und an die ein Ansaugrohr (104) und ein Förderrohr (105) gekoppelt sind, in denen das Kühlmittel fließt.

11. Verfahren nach einem der vorhergehenden Ansprüche,
wobei die Sicherheitstemperatur 10 Grad ist.

12. Verfahren zum Steuern eines Kühlschranks (1), der eine Lagerkammer (4) aufweist und mit dem Linearverdichter (10) ausgestattet ist, wobei das Verfahren das Verfahren zum Steuern des Linearverdichters nach einem der vorhergehenden Ansprüche und ferner die folgenden Schritte umfasst:
Messen einer Innentemperatur der Lagerkammer (4),
dann, wenn die gemessene Innentemperatur größer oder gleich einer voreingestellten Temperatur in dem Kühlschrank (1) ist, Anlegen des Antriebsstroms an den Linearverdichter (10).

13. Verfahren nach Anspruch 12, das ferner Folgendes umfasst:
nur Anlegen des Sicherheitsstroms an den Linearverdichter (10), wenn die gemessene Umgebungstemperatur kleiner oder gleich der Sicherheitstemperatur ist und die gemessene Innentemperatur größer oder gleich einer voreingestellten Temperatur in dem Kühlschrank (1) ist.

14. Verfahren nach Anspruch 12 oder 13, das ferner Folgendes umfasst:
nur Anlegen des Antriebsstroms an den Linearverdichter (10), wenn die gemessene Umgebungstemperatur größer ist als die Sicherheitstemperatur und die gemessene Innentemperatur größer oder gleich der Temperatur in dem Kühlschrank (1) ist,
wobei je größer die Außentemperatur, desto stärker der aktuelle Wert des Antriebsstroms eingestellt wird.

## Revendications

1. Procédé pour commander un compresseur linéaire (10) incluant un piston (130) et un ensemble moteur (140) pour entraîner le piston (130),
dans lequel l'ensemble moteur (140) inclut :
un stator extérieur (141) ayant une bobine à laquelle du courant est appliqué,
un stator intérieur (148) disposé à l'intérieur du stator extérieur (141), et
un aimant permanent (146) disposé de manière mobile à l'intérieur du stator extérieur (141) et du stator intérieur (148), dans lequel l'aimant permanent (146) est relié au piston (130) ;
dans lequel le compresseur linéaire (10) inclut en outre un trajet d'écoulement d'appui configuré pour fournir du fluide frigorigène d'appui au piston (130) ;
le procédé comportant les étapes consistant à :
mesurer une température ambiante ;
lorsque la température ambiante mesurée est égale ou inférieure à une température de sécurité préréglée, appliquer un courant de sécurité (S) à l'ensemble moteur (140) pour entraîner le piston (130) ; et
lorsque la température ambiante mesurée est supérieure à la température de sécurité, appliquer un courant d'entraînement (D) inférieur au courant de sécurité (S) à l'ensemble moteur (140) ;
dans lequel lorsque le courant de sécurité est appliqué à la bobine, le fluide frigorigène d'appui est détendu par la chaleur générée dans la bobine.

2. Procédé selon la revendication 1, comportant en outre l'étape consistant à :
mettre en marche le compresseur linéaire (10) et appliquer un courant d'entraînement à l'ensemble moteur (140) avant de mesurer la température ambiante ;
dans lequel, après la mesure de la température ambiante, lorsque la température ambiante mesurée est supérieure à la température de sécurité, le courant d'entraînement (D) est appliqué en continu à l'ensemble moteur (140).

3. Procédé selon l'une quelconque des revendications précédentes, comportant en outre les étapes consistant à :
après l'application du courant de sécurité à l'ensemble du moteur (140), mesurer de nouveau la température ambiante,
dans lequel lorsque la température ambiante mesurée est égale ou inférieure à la température de sécurité, appliquer en continu le courant de sécurité à l'ensemble moteur (140), et
lorsque la température ambiante mesurée est supérieure à la température de sécurité, appliquer le courant d'entraînement à l'ensemble moteur (140).

4. Procédé selon l'une quelconque des revendications précédentes, dans lequel le courant d'entraînement (D) appliqué à l'ensemble moteur (140) est supérieur à un courant appliqué minimal et inférieur à un courant appliqué maximal, le courant appliqué maximal étant inférieur au courant de sécurité, et/ou
dans lequel un courant appliqué maximal correspond à une sortie maximale du compresseur linéaire (10), et/ou
dans lequel le courant appliqué minimal correspond à une sortie minimale du compresseur linéaire (10).

5. Procédé selon l'une quelconque des revendications précédentes, dans lequel un courant appliqué maximal correspond à une valeur de courant du courant d'entraînement pour animer le piston (130) d'un mouvement de va-et-vient avec une distance de course maximale entre un point mort haut maximal (M TDC) et un point mort bas maximal (M_BDC).

6. Procédé selon l'une quelconque des revendications précédentes, dans lequel le courant de sécurité a une valeur pour animer le piston (130) d'un mouvement de va-et-vient avec une distance de course de sécurité entre un point mort haut de sécurité (S_TDC) et un point mort bas de sécurité (S_BDC).

7. Procédé selon la revendication 6 lorsque dépendante de la revendication 5, dans lequel la distance de course de sécurité est plus longue que la distance de course maximale.

8. Procédé selon l'une quelconque des revendications précédentes, comportant en outre les étapes consistant à :
arrêter le compresseur linéaire (10) et mesurer la température ambiante,
lorsque la température ambiante mesurée est égale ou inférieure à la température de sécurité, appliquer un courant de sécurité à l'ensemble moteur (140), et
après l'application du courant de sécurité, mesurer la température ambiante :
lorsque la température ambiante mesurée est égale ou inférieure à la température de sécurité, appliquer en continu le courant de sécurité à l'ensemble moteur (140), et
lorsque la température ambiante mesurée est supérieure à la température de sécurité, arrêter d'appliquer le courant de sécurité à l'ensemble moteur (140).

9. Procédé selon l'une quelconque des revendications précédentes,
dans lequel le trajet d'écoulement d'appui inclut un trajet d'écoulement d'appui de cylindre (125, 126) formé dans un cylindre (120), dans lequel le piston (130) est reçu, et un trajet d'écoulement d'appui d'armature (114) formé dans une armature (110), dans laquelle le cylindre (120) est reçu,
dans lequel le piston (130) est animé d'un mouvement de va-et-vient par l'ensemble moteur (140) pour comprimer du fluide frigorigène, et
dans lequel au moins une partie du fluide frigorigène comprimé s'écoule dans le trajet d'écoulement d'appui de cylindre (125, 126) et le trajet d'écoulement d'appui d'armature (114) et est fournie au piston (130).

10. Procédé selon l'une quelconque des revendications précédentes,
dans lequel la température ambiante correspond à une température extérieure d'une coque (101) dans laquelle le piston (130) est reçu et à laquelle un tuyau d'aspiration (104) et un tuyau de refoulement (105) sont couplés, dans lesquels le fluide frigorigène s'écoule.

11. Procédé selon l'une quelconque des revendications précédentes,
dans lequel la température de sécurité est de 10 degrés.

12. Procédé pour commander un réfrigérateur (1) ayant une chambre de stockage (4) et étant équipé du compresseur linéaire (10), le procédé comportant le procédé pour commander le compresseur linéaire selon l'une quelconque des revendications précédentes, et en outre les étapes consistant à :
mesurer une température interne de la chambre de stockage (4),
lorsque la température interne mesurée est égale ou supérieure à une température préréglée dans le réfrigérateur (1), appliquer le courant d'entraînement au compresseur linéaire (10).

13. Procédé selon la revendication 12, comportant en outre l'étape consistant à :
appliquer uniquement le courant de sécurité au compresseur linéaire (10), lorsque la température ambiante mesurée est égale ou inférieure à la température de sécurité et la température interne mesurée est égale ou supérieure à la température préréglée dans le réfrigérateur (1).

14. Procédé selon la revendication 12 ou 13, comportant en outre l'étape consistant à :
appliquer uniquement le courant d'entraînement au compresseur linéaire (10), lorsque la température ambiante mesurée est supérieure à la température de sécurité et la température interne mesurée est égale ou supérieure à la température dans le réfrigérateur (1),
dans lequel plus la température externe est élevée, plus la valeur de courant du courant d'entraînement est réglée haute.
